# EUROPEAN PATENT SPECIFICATION

(11) **EP 2 890 621 B1**
(45) Date of publication and mention of the grant of the patent: **03.10.2018**
(21) Application number: 12883751.5
(22) Date of filing: 30.08.2012
(51) Int. Cl.: B65D 83/06

(54) **POWDER DISPENSER**
PULVERSPENDER
DISTRIBUTEUR DE POUDRE

(43) Date of publication of application: 08.07.2015
(73) Proprietor: Zhejiang JM Industry Co. Ltd, Zhejiang (CN)
(72) Inventor: TU, Xufeng, Zhejiang (CN)
(74) Representative: Bridle, Andrew Barry
(86) International application number: PCT/IB2012/002080
(87) International publication number: WO 2014/033495

(56) References cited:
- EP-A1- 0 473 965
- CN-A- 101 879 966
- CN-U- 202 642 483
- CN-U- 202 697 535
- CN-Y- 201 395 334
- JP-A- H08 119 353
- JP-A- 2000 189 858

## Description

### Field of the Invention

The present invention relates to dispensers generally, and more particularly to a dispenser with an arrangement for efficiently dispensing a solid particulate material, such as a powder, from within a container.

### Background of the Invention

While liquid manual pump and pressurized gas discharge dispensers have been widely implemented in a variety of applications, dispensers for solid materials are less common. In addition to the obvious challenge of increased viscosities, surface friction, and specific weights of solidous materials in comparison to liquid materials, the design of solid material dispensing systems must also contemplate flowability and distribution of the stored material in preparation for dispensation, as well as effects on the flowability of the material in the presence or absence of environmental conditions, such as the effect of moisture accumulation in the solid material container over time. As a consequence of these and other challenges, efforts to develop solid material dispensers have been limited.

A particular shortcoming in the availability of conventional solid material dispensers is an apparatus that is relatively inexpensive to manufacture, so as to be useful in connection with the storage, sale, and dispensation of relatively inexpensive consumer products. Currently available solid material dispensers are either prohibitively expensive to use in connection with low-cost consumer products, and particularly as a disposable consumer product dispenser, and/or are ineffective in consistently dispensing a desired quantity or quality of the solid material.

One conventional approach in solid material dispensation relies upon pressurized gas to disperse the solidous particulate material into a pseudo-suspension for uptake into outlet conduits. The pressurized gas may be air that is pressurized through a manual pumping action by the user, or may be air or another gas releasably stored under pressure in a separate container. Pumping action by the user, or the selective release of pressurized gas from the separate container, or both, act to drive the solidous material into one or more outlet conduits, and possibly as partially suspended in the pressurized gas. Such a conventional approach, however, is inconsistent in delivering a known quantity of the solid material to the outlet conduit, and is variable based upon the specific weight of the product, the amount of the product remaining within the container, the flowability of the product, and changing characteristics of the product in the container over time. Moreover, the conventional systems which rely upon pressurized air to disperse and distribute the solid material product have proven to be inadequate in dispersing and consistently dispensing a known quantity and quality of the product.

European patent application EP0473965 describes a dispensing device (1) for manual dispensing of a powder medium, having an air pump (9) whose compressed air flow takes up the powder medium via an injector (37) and a turbulence chamber (38) from a metering arrangement (25), which can be filled up automatically via a media store (4), and dispenses the powder medium under acceleration through an outlet channel (21)

It is therefore an object of the invention to provide a dispenser mechanism for dispensing solvent particulate material, such as a powder, in a known quantity per pump cycle.

It is another object of the present invention to provide a solid particulate material dispenser that effectively maintains a homogeneity of the discharge contents for each pump cycle.

It is a further object of the present invention to provide a manual pumping mechanism for mechanically mixing the solidous material product in the container.

It is a still further object of the present invention to provide a dispenser mechanism that is effective in limiting environmental exposure to the solidous material product in the container.

### Summary of the Invention

By means of the present invention, solidous material may be dispensed with consistent qualities and concentrations. A device for dispensing such solidous material may be economically manufactured, so as to be useful in disposable and other relatively low-cost consumer product applications.

In one embodiment, a pump dispenser of the present invention includes a container defining a cavity for storing a dispensable material, and a pump body positionable in the cavity and having a pump chamber fluidly communicatable with a pickup chamber that is fluidly communicatable with a dispensation chamber. At least a portion of the dispensation chamber is defined by a lumen of a flexible resilient member. The pump body further includes an intake opening communicating the cavity with the pickup chamber, and a central axis defining mutually perpendicular axial and radial directions. The flexible resilient member sealingly separates the dispensation chamber from the pump chamber, so that the pump chamber is fluidly communicatable with the dispensation chamber only thorough the pickup chamber. The pump dispenser further includes a piston positioned at the pump chamber, and slidably engaged with the pump body. The piston is axially movable in the pump chamber in a first axial
direction to force airflow into the pickup chamber to an extent sufficient to carry the dispensable material through the dispensation chamber.

### Brief Description of the Drawings

Figure 1A is a cross-sectional view of a dispenser of the present invention in a top position;
Figure 1B is a cross-sectional view of the dispenser illustrated in Figure 1A in a bottom position;
Figure 2A is an enlarged cross-sectional view of a portion of the dispenser illustrated in Figures 1A and 1B during an upstroke portion of a pump cycle;
Figure 2B is an enlarged cross-sectional view of a portion of the dispenser illustrated in Figures 1A and 1B during a downstroke portion of a pump cycle;
Figure 3 is an enlarged cross-sectional view of a portion of the dispenser illustrated in Figures 1A and 1B;
Figure 4 is an enlarged cross-sectional view of a portion of the dispenser illustrated in Figures 1A and 1B;
Figure 5A is a side view of a portion of the dispenser apparatus illustrated in Figures 1A and 1B with a nozzle member in an open condition;
Figure 5B is a side view of a portion of the dispenser illustrated in Figures 1A and 1B with the nozzle member in a closed condition;
Figure 6A is a cross-sectional view of a dispenser of the present invention in a top position;
Figure 6B is a cross-sectional view of the dispenser illustrated in Figure 6A in a bottom position;
Figure 7A is a cross-sectional view of a dispenser of the present invention in a top position;
Figure 7B is a cross-sectional view of the dispenser illustrated in Figure 7A in a bottom position; and
Figure 8 is an enlarged cross-sectional view of a portion of a dispenser of the present invention.

### Detailed Description of the Preferred Embodiments

The objects and advantages enumerated above together with objects, features, and advances represented by the present invention will now be presented in terms of detailed embodiments described with reference to the attached drawing figures which are intended to be representative of various possible configurations of the invention. Other embodiments and aspects of the invention are recognized as being within the grasp of those having ordinary skill in the art.

In the following description of the invention, the terms "top" and "bottom", "upper" and "lower", or similar related terms are used to describe the component parts of the dispenser and their relative positions. Such terms are used only with respect to the drawings, and should not be considered limiting as to the absolute orientation of the component parts in operation.

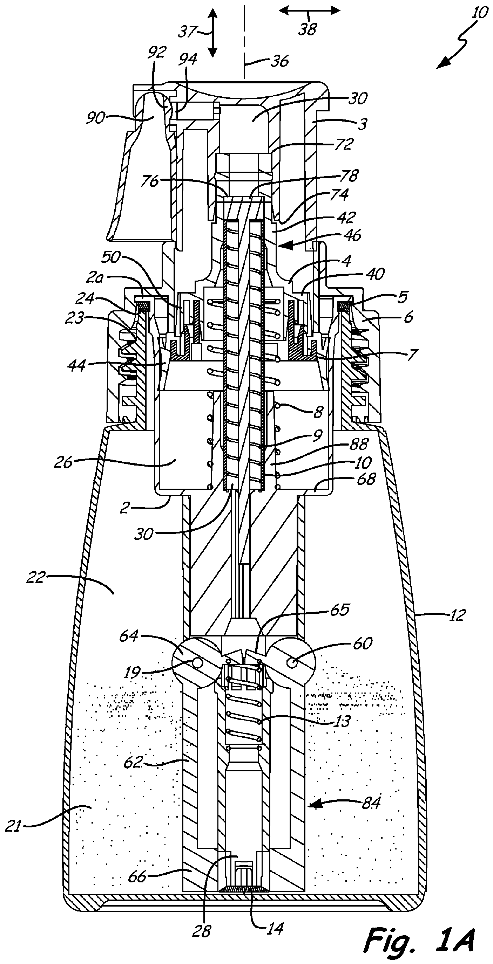

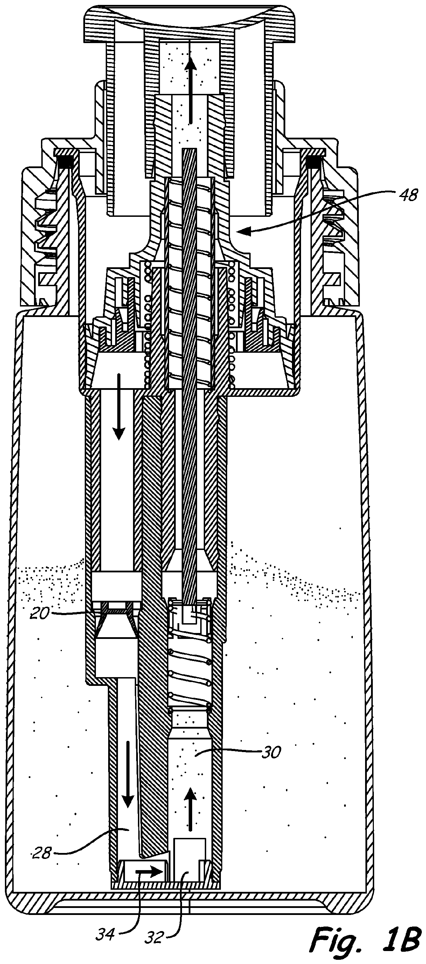

With reference now to the drawing figures, and first to Figures 1A and 1B, a pump dispenser 1 may be particularly suited for dispensing solidous material under a manually-developed pressure. The solidous material may be solid particulate matter that is dispersible into a suspension, pseudo-suspension, or mixture in air, so as to be dispensable under the force of pressurized air as a suspension, dispersion, or mixture of solid matter in a moving air stream. In some embodiments, the solidous material 21 may be talcum powder including hydrated magnesium silicate as foliated to fibrous masses with a specific gravity of 2.5-2.8 g/cm³. Other particles, crystals, fibers, minerals, agglomerates, compounds, and the like, however, are contemplated as being dispensable by pump dispenser 1 of the present invention.

Pump dispenser 1 includes a container 12 defining a cavity 22 in which solidous material 21 may be stored and prepared for dispensation. Container 12 may be in the form of, for example, a plastic bottle having a threaded neck portion 23 that cooperatively engages with a connector 6 for securement of the pumping mechanism to container 12, as will be described in greater detail hereinbelow. Container 12 may accordingly assume a variety of configurations and materials suitable in the containment of solidous material 21.

Pump body 2 is positionable in container 12, and securable to neck portion 23 by being press fit between connector 6 and an upper edge 24 of neck portion 23. In the illustrated embodiment, a resilient gasket 5 assists in sealingly securing pump body flange 2a to upper edge 24 of neck portion 23. The threadable engagement of connector 6 to neck portion 23 desirably secures pump body 2 to container 12 in a sealed manner.

Pump body 2 includes a pump chamber 26, a pickup chamber 28, and a dispensation chamber 30. The operation of pump dispenser 1 provides for manually pressurized air flow to pass from pump chamber 26 to pickup chamber 28, and subsequently to dispensation chamber 30, and ultimately out through nozzle member 15 of cap 3. The operation of pump dispenser 1 will be described in greater detail hereinbelow, and it is contemplated that one or more valves and the like may separate one or more of pump chamber 26, pickup chamber 28, and dispensation chamber 30. However, in the illustrated embodiment, pressurized air or other gas may be communicated by the operation of pump dispenser 1 from pump chamber 26 through pickup chamber 28 and dispensation chamber 30. Accordingly, the combination of pump chamber 26, pickup chamber 28, and dispensation chamber 30 may be alternatively considered as a single fluidly connected chamber. For the purposes of this description, however, portions of the pressurized air travel through pump dispenser 1 will be described as the above-indicated chamber segments. It is to be understood that no specific structure may define a transition from or between any of pump chamber 26, pickup chamber 28, and dispensation chamber 30, with such chambers being delineated herein for descriptive purposes only.

In the illustrated embodiment, pump chamber 26 communicates with pickup chamber 28 through a separation valve 20, which may be a one-way valve permitting air flow into pickup chamber 28 from pump chamber 26 upon a sufficient pressure drop from pump chamber 26 to pickup chamber 28. An example separation valve 20 is a check valve with a predetermined opening force that opens only when a sufficient pressure differential is created between pump chamber 26 and pickup chamber 28. In most embodiments, the force necessary to open separation valve 20 is relatively small, in that the primary utility of separation valve 20 may be to prevent backflow of air and/or solidous material 21 from pickup chamber 28 to pump chamber 26. Another utility of separation valve 20 may be to provide a "burst" airflow from pump chamber 26 to pickup chamber 28, as a sudden pressurized airflow released from pump chamber 26 upon exceeding the opening force of separation valve 20. Such a bust airflow into pickup chamber 28 may assist in dispersing solidous material 21 into the moving airstream in pickup chamber 28 for passage of a solidous material/airflow mixture into dispensation chamber 30.

An intake opening 32 communicates cavity 22 with pickup chamber 28, and represents an opening through which solidous material 21 may be imported into the air flow path for dispensation out from pump dispenser 1. Intake opening 32 may be positioned at or near base 14 of pump body 2, wherein the force of gravity will typically congregate solidous material 21 near the bottom of cavity 22, in close approximation to base 14. Consequently, solidous material 21 may be available for introduction through intake opening 32 until solidous material 21 is nearly or completely exhausted from cavity 22. To be effective as an entry point for solidous material 21, intake opening 32 is preferably appropriately sized and configured to permit an adequate loading rate of solidous material 21 therethrough to accommodate dispersion of solidous material into the pressurized airstream at pickup chamber 28 at a desired volumetric concentration. In some embodiments, intake opening 32 may have an opening area of between about 10-100 mm², and more preferably between about 25-50mm².

A connector portion 34 may constitute a transition from pickup chamber 28 to dispensation chamber 30. In some embodiments, connector portion 34 may be located at or near base 14, and directs pressurized airflow adjacently past intake opening 32 into dispensation chamber 30.

Pump body 2 has a central axis 36 that defines mutually perpendicular axial and radial directions 37, 38. Pump body 2 may typically be arranged to facilitate pumping actuation generally along axial direction 37, though alternative arrangements are contemplated by the present invention.

Pump dispenser 1 further includes a piston 4 that is slidably engaged to pump body 2 so as to selectively generate pressurized air in pump chamber 26 upon a downwardly axial movement of piston 4 with respect to pump body 2. Piston 4 includes a piston head portion 40, a piston rod portion 42, and a piston seal portion 44 extending from piston head portion 40. Piston seal portion 44 is slidably engaged with, and preferably makes an air-tight seal with side wall 18 of pump body 2 defining a portion of pump chamber 26. Axial downward motion of piston 4 into pump chamber 26, as illustrated in Figure 1B, compresses air within pump chamber 26, correspondingly increasing the air pressure within pump chamber 26 to a level exceeding the opening force of separation valve 20, as described above. Once open, separation valve 20 permits pressurized air to flow therethrough and into pickup chamber 28 for dispersion of solidous material 21 into a mixed airflow stream delivered to dispensation chamber 30. The directional arrows depicted in Figure 1B illustrate the pressurized airflow through pump chamber 26, pickup chamber 28, and dispensation chamber 30. In operation, piston seal portion 44 reciprocally moves up and down in slidable engagement with side wall 18 of pump body 2, as depicted in the relationship between Figures 1A and 1B. Piston 4 is in a top position 46 in Figure 1A, and a bottom position 48 in Figure 1B. As will be described in greater detail hereinbelow, movement of piston 4 between top position 46 and bottom position 48 drives the operation of pump dispenser 1 in collecting and dispensing a solid product mixture under pressure.

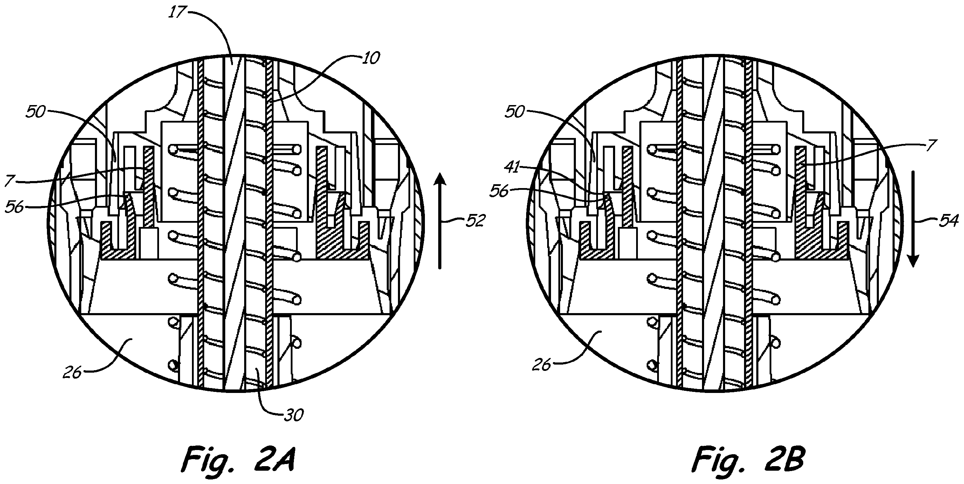

Piston head portion 40 includes an air inlet aperture 50 that is regulated by an air intake valve 7 to selectively permit passage of air from an exterior environment into pump chamber 26. An enlarged view of piston head portion 40 and air intake valve 7 is illustrated in Figures 2A and 2B, with Figure 2A representing an "upstroke" of piston 4 resulting in air intake valve 7 permitting air flow into pump chamber 26, and Figure 2B illustrating the "downstroke" of piston 4 in which air intake valve 7 prevents air from escaping from pump chamber 26 through air inlet aperture 50. The upward axial movement of piston 4 during the upstroke portion of a pumping cycle is denoted by directional arrow 52, and the axially downward motion of piston 4 in the downstroke portion of the pumping cycle being illustrated in Figure 2B and represented by directional arrow 54. During the upstroke portion of the pumping cycle illustrated in Figure 2A, upward axial movement of piston 4 driven by a spring bias force creates a reduced pressure environment in pump chamber 26 as the volume of pump chamber 26 expands. The reduced pressure environment within pump chamber 26 creates pressure differential with respect to the ambient, thereby developing a force that pushes valve tip 56 away from a boundary wall 41 of piston head portion 40. The displacement of valve tip 56 from boundary wall 41 is also driven by the air pressure differential between the exterior environment and the reduced pressure environment within pump chamber 26. The relative positive pressure applied against valve tip 56 displaces it away from contact with boundary wall 41. Such displacement permits the entry of air through air inlet aperture 50 and around valve tip 56 into pump chamber 56, as illustrated in Figure 2A.

Downward axial movement of piston 4 during the downstroke of the pump cycle illustrated in Figure 2B creates an increased pressure environment within pump chamber 26 as a result of the reduced volume within pump chamber 26. The increased pressure within pump chamber 26 forces valve tip 56 against boundary wall 41 in an air sealing manner to prevent escape of air out through air inlet aperture 50. Air intake valve 7 therefore acts as a one-way valve to permit air entry through air intake aperture 50 during the upstroke of piston 4, but prevents the escape of air from pump chamber 26 during the compression downstroke portion of the pumping cycle. Various valving arrangements for manual pumping systems are well known in the art, and a variety of configurations therefore are contemplated as being useful in the present invention.

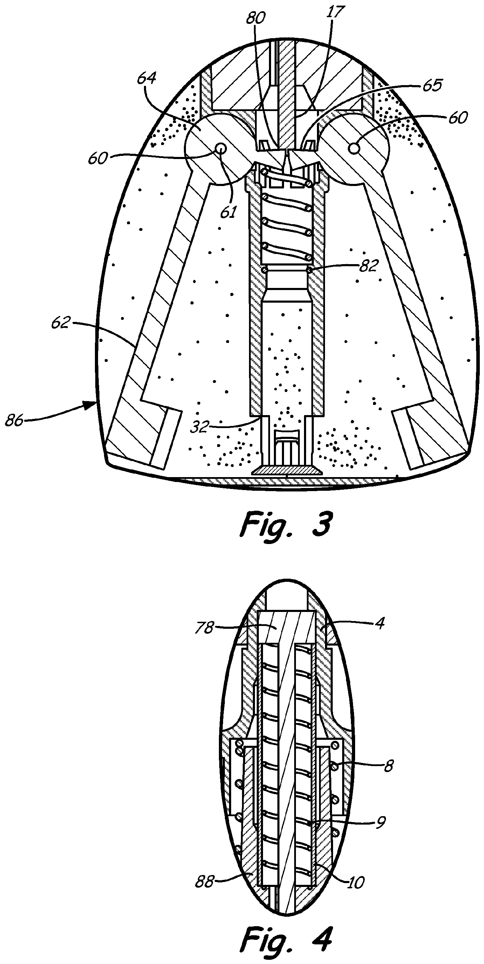

Another aspect of the present invention is illustrated in Figures 1A, 1B, and 4, wherein at least a portion of dispensation chamber 30 is defined by a lumen of a flexible resilient member 10 that sealingly separates dispensation chamber 30 from pump chamber 26 in a manner so that pump chamber 26 is fluidly communicatable with dispensation chamber 30 only through pickup chamber 28. Resilient tube 10 is of a characteristic which permits a sealing, air-tight connection to both piston rod portion 42 of piston 4 and support column 88 of pump body 2. Thus, a sealed passageway portion of dispensation chamber 30 may be defined by resilient tube 10 between support column 88 of pump body 2 and piston rod portion 42 of piston 4. For the purposes hereof, the term "sealing" is intended to mean a substantially air-tight connection up to air pressures exerted upon components of pump dispenser 1 in its normal operation. The substantially air-tight connection forming the "sealing engagement" between resilient tube 10 and piston 4 and between resilient tube 10 and support column 88 is therefore adequate to contain and convey the mixed air/particulate solid air stream pressurized by the pumping action of piston 4 in pump chamber 26. The substantially air-tight sealing connection substantially prevents air leakage into or out from dispensation chamber 30 under the normal operating conditions of pump dispenser 1.

To create the sealing connection described above, tube 10 is preferably sufficiently resilient to self-seal against the respective surfaces of piston rod portion 42 and support column 88 under a moderate radially expansive force supplied by a scaffold 9 which, in the illustrated embodiment, is a coil spring placed under radial compression in the lumen of resilient tube 10. Scaffold 9 is preferably arranged to provide a restorative radially outwardly-directed force that is sufficient to press resilient tube 10 into a sealing engagement with piston rod portion 42 of piston 4 and support column 88 of pump body 2. Scaffold 9 may further be arranged to assist in maintaining open the lumen of resilient tube 10 during the pumping cycle in which actuator rod head 78 axially compresses scaffold 9, preferably against a restorative bias force of scaffold 9, during the downstroke portion of the pump cycle. Due to the downward movement of actuator rod head 78 during the downstroke of the pump cycle, resilient tube 10 is also preferably sufficiently flexible to permit a folding or wrinkling of resilient tube 10 during the downstroke, only to be restored to its original configuration upon completion of the upstroke toward top position 46. In such a manner, resilient tube 10 forms a sealing and flexible portion of the structure defining dispensation chamber 30 to accommodate the movement of actuator rod 17 through dispensation chamber 30. An example material for resilient tube 10 is a silicone having an inner diameter of about 1-10 mm, and preferably between about 3-7 mm, and a wall thickness of about 0.1-4 mm, and more preferably between about 0.2-1.5 mm. Such parameters provide the desired extent of resilience and flexibility, which are an aspect of the present invention.

As described above, axial compression of scaffold 9 preferably generates a restorative axial force urging actuator rod head 78 upwardly along axial direction 37. Scaffold 9 may be a distinct component positioned in the lumen of resilient tube 10, or may instead be incorporated within or radially external to resilient tube 10. Moreover, it is contemplated that resilient tube 10 may assume configurations other than a cylindrical tube, and may have only portions of which exhibit resilient and/or flexible properties. It is to be understood that resilient tube 10 is contemplated as defining a flexible portion of the structure defining dispensation chamber 30 to accommodate the movement of actuator rod 17 with respect to dispensation chamber 30.

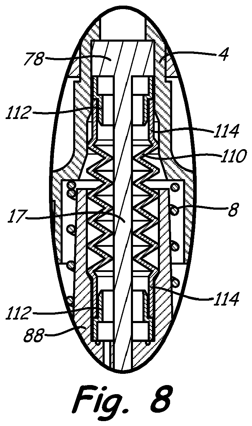

An example alternative embodiment for the combination of resilient tube 10 and scaffold 9 is illustrated in Figure 8, wherein flexible tube 110 is engaged to actuator rod 17 through resilient plugs 112 to define a portion of dispensation chamber 30, and to sealingly separate dispensation chamber 30 from pump chamber 26 in a similar manner as that described above. Resilient plugs 112 may preferably have an inner diameter that is substantially equal to an outer diameter of actuator rod 17, so as to frictionally and resiliently engage an outer diameter surface of actuator rod 17, with a first resilient plug 112 being positioned at actuator rod head 78 of actuator rod 17, and a second resilient plug 112 being positioned at support column 88 of pump body 2. Resilient plugs 112 may be fabricated from a rubber or other material that exhibits elastomeric-type properties of resiliently engaging actuator rod 17 and flexible tube 110.

As illustrated in Figure 8, flexible tube 110 may have an "accordion" type configuration to facilitate axial compression and expansion in response to the pump cycle, as described above. In one example embodiment, flexible tube 110 may be fabricated from a relatively thin-walled polyethylene, such as low density polyethylene. End sections 114 of flexible tube 110 may be frictionally engaged with resilient plug members 112, and sealingly engaged between plug members 112 and a respective one of piston 4 and support column 88.

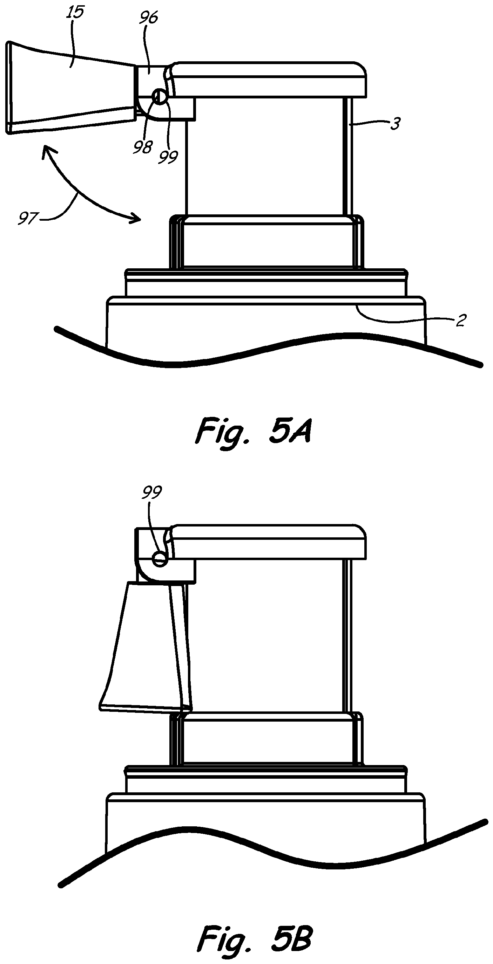

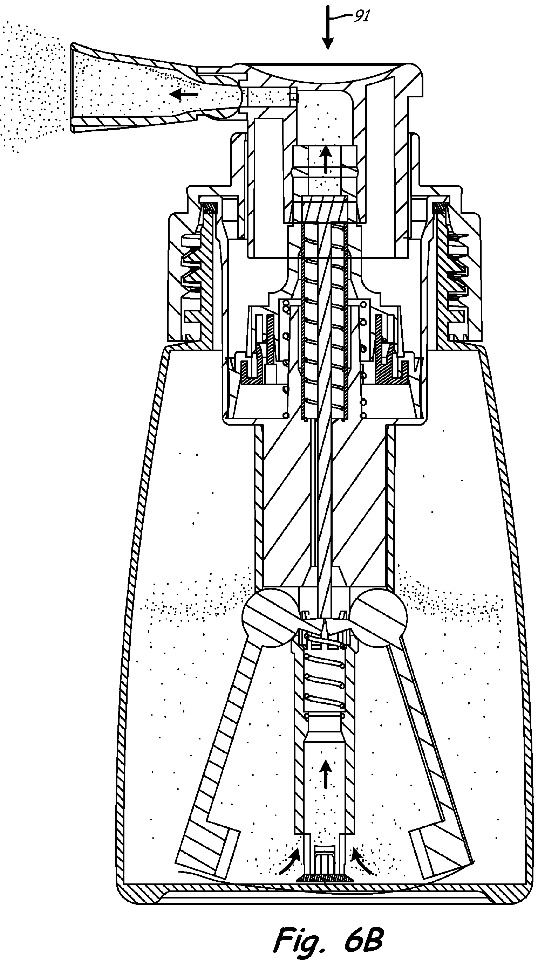

Another aspect of the present invention includes a nozzle member 15 having a channel 90 extending therethrough for dispensing the air/solidous material mixture out from dispensation chamber 30. In the illustrated embodiment, nozzle member 15 may be selectively movable to bring channel 90 into and out from communication with dispensation chamber 30 in cap 3. In the closed condition for nozzle member 15 illustrated in Figures 1A, 5B, and 6A, wall 92 substantially or completely blocks an outlet 94 of dispensation chamber 30 in cap 3. When pivoted to an open condition, nozzle member 15 presents channel 90 to outlet 94 of dispensation chamber 30, as illustrated in Figures 5A and 6B, to permit dispensation of the air/solidous material flow stream out from pump dispenser 1. Nozzle member 15 may be pivotally secured to cap bracket 96 with a pivot nodule 98 extending through cap bracket recess 99. The pivoting motion of nozzle member 15 is depicted by directional arrow 97.

An advantage introduced the pivoting nozzle member 15 is the capability to easily close off outlet 94 of dispensation chamber 30, so as to inhibit or prevent moisture or other environmental element intrusion from the exterior environment into dispensation chamber 30, and, more importantly, to the solidous material-containing cavity 22. In some embodiments, pump dispenser 1 may be employed to operably dispense talcum powder, the physical properties of which may be significantly altered in high moisture environments. Therefore, it may be a useful function of pump dispenser 1 to limit the accessibility of moisture to solidous material 1 in container 12. The capability of nozzle member 15 to pivot into a positioning in which wall 92 closes outlet 94 of dispensation chamber 30 creates a closed environment for solidous material 21 that minimizes moisture or other environmental element intrusion to cavity 22.

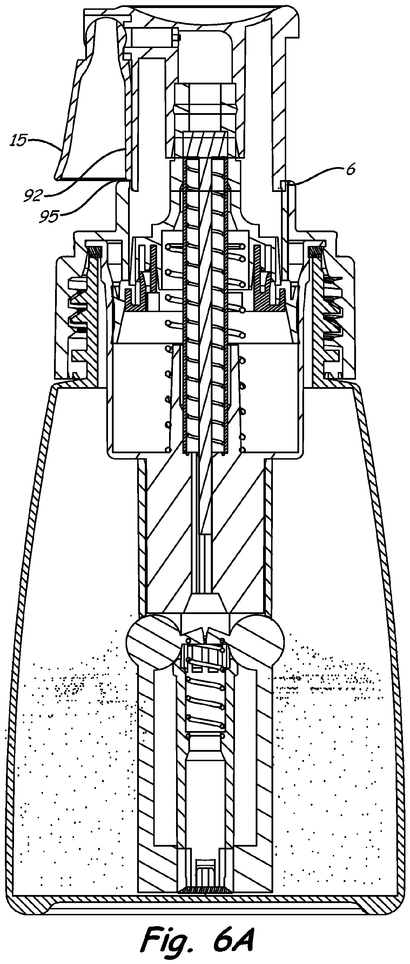

Another utility of pivotable nozzle member 15 is illustrated in Figures 6A and 6B, wherein wall 92 of nozzle member 15 may be pivoted into a closed condition to prevent actuation of pump dispenser 1. In particular, the close condition of nozzle member 15 positions wall 92 for contact with upper surface 95 of connector 6. In the event that cap 3 is attempted to be pushed downwardly, as in the downstroke of a pump cycle, contact between wall 92 and upper surface 95 of connector 6 prevents or stops downward motion of cap 3. In some embodiments, the configuration of nozzle member 15 places wall 92 substantially in contact with upper surface 95 of connector 6 when piston 4 is in top position 46. Such an arrangement establishes a "lock", in which nozzle member 15 prevents downward motion of cap 3 when nozzle member 15 is in a closed condition. In other embodiments, however, the closed condition of nozzle member 15 permits some downward motion of cap 3, but arrests such downward motion between top position 46 and bottom position 48. Figure 6B illustrates nozzle member 15 in an open condition with channel 90 in fluid communication with outlet 94 of dispensation chamber 30 in cap 3. The positioning of nozzle member 15 in an open condition, as illustrated in Figure 6B, permits downward movement of cap 3, as depicted by directional arrow 91, in the downstroke of the pump cycle to create a pressurized air stream to dispense the air/product mixture out from nozzle member 15.

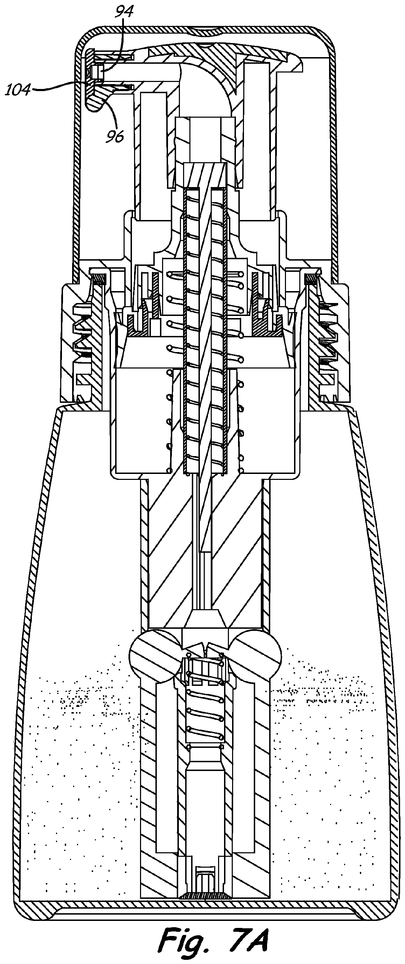

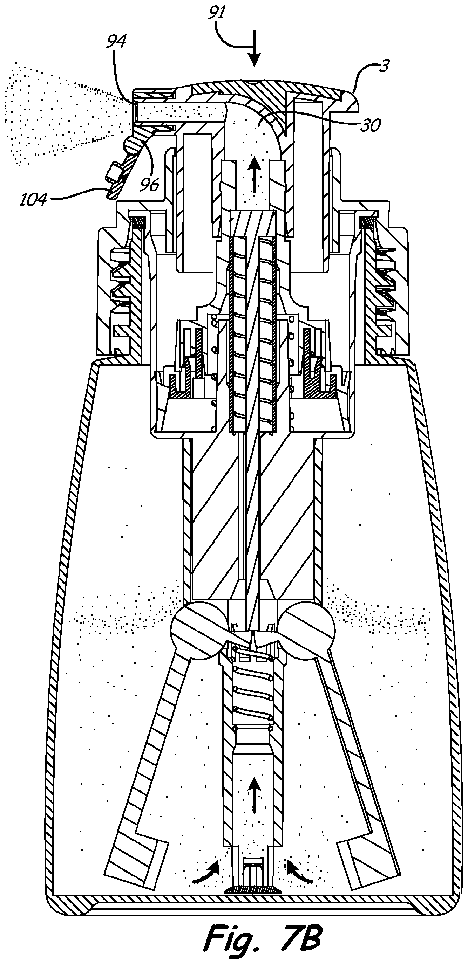

Another embodiment of the invention is illustrated in Figures 7A and 7B, wherein a nozzle cap 104 may be pivotally secured to cap bracket 96 to selectively open and close outlet 94 of dispensation chamber 30 at cap 3.

In addition to the forgoing, the operation of pump dispenser 1 will be described with reference to the drawings. Initially, nozzle member 15 is rotated along direction 97 from a closed condition to an open condition to permit downward movement of cap 3, and to present channel 90 into communication with dispensation chamber 30 at cap 3. When a downward force along directional arrow 91 is placed upon cap 3, such force is transmitted by cap shoulder 72 to piston head platform 70 to thereby transfer the downward axial motion along directional arrow 37 to piston 4. Such downward motion is also transmitted from piston rod shoulder 76 to actuator rod head 78 so that actuator rod 17 also proceeds axially downward along directional arrow 37.

As piston 4 proceeds axially downwardly in the pump downstroke, air pressure in pump chamber 26 increases to a point at which separation valve 20 opens to permit the passage of air into pickup chamber 28. As piston 4 and actuator rod 17 continue downward movement, actuator rod end portion 80 comes into contact with, and pushes manipulator tab 65 downwardly to cause manipulators 19 to pivot about manipulator pivot 60. As manipulators 19 operate, an amount of solidous material 21 enters into pickup chamber 28 through intake opening 32, wherein the pressurized air stream motivates the solidous material into a mixed air/solidous material flow stream into dispensation chamber 30. Continued air pressure forces the flow stream mixture out through outlet 94 and channel 90 of nozzle member 15, as illustrated in Figure 6B. Removal of the force upon cap 3 permits first and second bias members 8, 13, and scaffold 9, to restoratively urge piston 4, actuator rod 17, and manipulator tabs 65 upwardly to place manipulator arm distal end 66 in a covering relationship with intake opening 32, and to urge piston 4 and actuator rod 17 toward to position 46. The negative air pressure created in pump chamber 26 as a result of the expanding volume in pump chamber 26 forces open air intake valve 7 to permit external environment air to enter into pump chamber 26 to substantially equalize internal and external pressures. As piston 4 and actuator rod 17 reach top position 46, pump dispenser 1 is ready for a subsequent pumping action.

The invention has been described herein in considerable detail in order to comply with the patent statutes, and to provide those skilled in the art with the information needed to apply the novel principles and to construct and use embodiments of the invention as required. However, it is to be understood that various modifications may be accomplished without departing from the scope of the invention itself.

## Claims

1. A pump dispenser (1), comprising:
a container (12) defining a cavity (22) for storing a dispensable material;
a pump body (2) positionable in said cavity (22) and having a pump chamber (26) fluidly communicatable with a pickup chamber (28) that is fluidly communicatable with a dispensation chamber (30),**characterised in that** at least a portion of said dispensation chamber (30) is defined by a lumen of a flexible member (10) to sealingly separate said dispensation chamber (30) from said pump chamber (26), so that said pump chamber (26) is fluidly communicatable with said dispensation chamber (30) only through said pickup chamber (28), said pump body (2) further including an intake opening (32) communicating said cavity (22) with said pickup chamber (28), and a central axis (36) defining mutually perpendicular axial and radial directions (37, 38); and
a piston (4) positioned at said pump chamber (26) and slidably engaged with said pump body (2), said piston (4) being axially movable in said pump chamber (26) in a first axial direction to force airflow into said pickup chamber (28) to an extent sufficient to carry the dispensable material through said dispensation chamber (30).

2. A pump dispenser (1) as in Claim 1, including a scaffold (9) radially supporting said flexible member (10) to maintain open said lumen.

3. A pump dispenser (1) as in Claim 2 wherein said scaffold (9) is disposed in said lumen in contact with said flexible member (10).

## Patentansprüche

1. Pumpenspender (1), umfassend:
einen Behälter (12), der einen Hohlraum (22) zur Aufbewahrung eines spendbaren Materials definiert;
einen Pumpenkörper (2), der in dem Hohlraum (22) positionierbar ist und eine Pumpenkammer (26) aufweist, die fluidmäßig mit einer Aufnahmekammer (28) verbindbar ist, die fluidmäßig mit einer Spendekammer (30) verbindbar ist, **dadurch gekennzeichnet, dass** mindestens ein Abschnitt der Spendekammer (30) von einem Lumen eines flexiblen Elements (10) definiert ist, um die Spendekammer (30) abdichtend von der Pumpenkammer (26) zu trennen, sodass die Pumpenkammer (26) fluidmäßig mit der Spendekammer (30) nur durch die Aufnahmekammer (28) verbindbar ist, wobei der Pumpenkörper (2) ferner eine Ansaugöffnung (32), die den Hohlraum (22) mit der Aufnahmekammer (28) verbindet, und eine Mittelachse (36), die zueinander senkrechte axiale und radiale Richtungen (37, 38) definiert, beinhaltet; und
einen Kolben (4), der an der Pumpenkammer (26) positioniert und in Gleiteingriff mit dem Pumpenkörper (2) ist, wobei der Kolben (4) axial in der Pumpenkammer (26) in einer ersten axialen Richtung bewegbar ist, um Luftströmung in die Aufnahmekammer (28) in einem Ausmaß zu zwingen, das ausreicht, um das spendbare Material durch die Spendekammer (30) zu befördern.

2. Pumpenspender (1) nach Anspruch 1 einschließlich eines Gerüsts (9) zum radialen Abstützen des flexiblen Elements (10), um das Lumen offenzuhalten.

3. Pumpenspender (1) nach Anspruch 2, worin das Gerüst (9) in dem Lumen in Kontakt mit dem flexiblen Element (10) angeordnet ist.

## Revendications

1. Distributeur à pompe (1), comprenant :
un récipient (12) définissant une cavité (22) pour stocker un matériau distribuable ;
un corps de pompe (2) pouvant être positionné dans ladite cavité (22) et comportant une chambre de pompe (26) pouvant communiquer fluidiquement avec une chambre de prise (28) pouvant communiquer fluidiquement avec une chambre de distribution (30), **caractérisé en ce qu'**au moins une partie de ladite chambre de distribution (30) est définie par une lumière d'un élément flexible (10) pour séparer hermétiquement ladite chambre de distribution (30) de ladite chambre de pompe (26), de sorte que ladite chambre de pompe (26) puisse communiquer fluidiquement avec ladite chambre de distribution (30) uniquement par l'intermédiaire de ladite chambre de prise (28), ledit corps de pompe (2) comprenant en outre une ouverture d'admission (32) communiquant ladite cavité (22) avec ladite chambre de prise (28), et un axe central (36) définissant des directions axiale et radiale mutuellement perpendiculaires (37, 38) ; et
un piston (4) positionné au niveau de ladite chambre de pompe (26) et engagé coulissant dans ledit corps de pompe (2), ledit piston (4) étant mobile axialement dans ladite chambre de pompe (26) dans une première direction axiale pour imposer dans ladite chambre de prise (28) un flux d'air suffisamment important pour transporter le matériau distribuable dans ladite chambre de distribution (30).

2. Distributeur à pompe (1) selon la revendication 1, comprenant un support (9) supportant radialement ledit élément flexible (10) pour maintenir ladite lumière ouverte.

3. Distributeur à pompe (1) selon la revendication 2, dans lequel ledit support (9) est disposé dans ladite lumière en contact avec ledit élément flexible (10).
